# EUROPEAN PATENT APPLICATION

(11) **EP 2 865 602 A1**
(43) Date of publication of application: **29.04.2015**
(21) Application number: 14161888.4
(22) Date of filing: 27.03.2014
(51) Int. Cl.: B65B 43/52, B65B 5/02, B65B 5/08, B65G 54/02, B65G 17/32

(54) **A system and method for packaging products**

(30) Priority: 23.10.2013 IT TO20130858
(71) Applicant: Cavanna S.p.A., 28077 Prato Sesia (NO) (IT)
(72) Inventor: Giacobbe, Fulvio, I-28077 Prato Sesia (Novara) (IT); Parino, Dario, I-28077 Prato Sesia (Novara) (IT)
(74) Representative: Marchitelli, Mauro

(57) **Abstract**

A packaging system, comprising:
- a container forming station (12),
- a container filling station (14), and
- a conveyor (32) arranged to pick up containers (C) from said forming station (12) and to transfer the containers (C) to said filling station (14),

wherein said conveyor (32) is formed by a linear motor including a stator (34) and a plurality of movers (36) independently movable from each other along said stator (34), wherein each of said movers (36) carries a respective pushing element (40) and wherein, during operation, each container (C) is held between two pushing elements (40) of two movers (36) adjacent to each other.

## Description

### Field of the invention

The present invention relates to a system and method for packaging products in containers such as boxes and the like.

### Description of the prior art

Typically, for packaging products in containers such as boxes and the like, a packing system is used comprising:
- a container forming station in which a forming machine carries out the forming of containers, starting from blanks formed by die-cut sheets of cardboard or the like,
- a filling station in which a manipulator with one or more gripping heads carries out the gripping of loose or ordered products and places the products inside the containers.

Downstream of the filling station, a closing station can be provided in which the lids of the containers, if present, are folded and sealed.

In packaging systems of this type, a conveyor is generally provided, equipped with a plurality of pushing elements that move the containers on a supporting surface from the forming station to the filling station and eventually to the closing station. In traditional solutions, the conveyor is usually formed by a motorized closed loop chain carrying a plurality of pushing elements spaced apart by a constant pitch.

In packaging systems of this type, it is often difficult to coordinate the work cycle of the manipulator that carries out the filling of containers with the container forming machine and, if present, with the container closing unit. The difficulties of coordinating the speed of the various operating units of the system become even more serious when a different format of the containers is required (container size and number of products in each container) in an existing system.

### Object and summary of the invention

The present invention aims to provide a packaging system which can overcome the problems of the prior art.

According to the present invention, this object is achieved by a packaging system having the characteristics forming the subject of claim 1 and by a packaging method having the characteristics of claim 4.

The claims form an integral part of the disclosure provided in relation to the invention.

### Brief description of the drawings

The present invention will now be described in detail with reference to the attached drawings, given purely by way of non-limiting example, wherein:
- Figure 1 is a schematic perspective view of a packaging system according to the present invention,
- Figures 2 and 3 are perspective views on a larger scale of the part indicated by the arrow II in Figure 1,
- Figure 4 is a detail on a larger scale of the part indicated by the arrow IV in Figure 1,
- Figures 5, 6 and 7 are schematic perspective views illustrating the forming, filling and closing sequence of the containers, and
- Figures 8 to 16 are schematic front views illustrating the work sequence of the packaging system according to the present invention.

### Detailed description of the invention

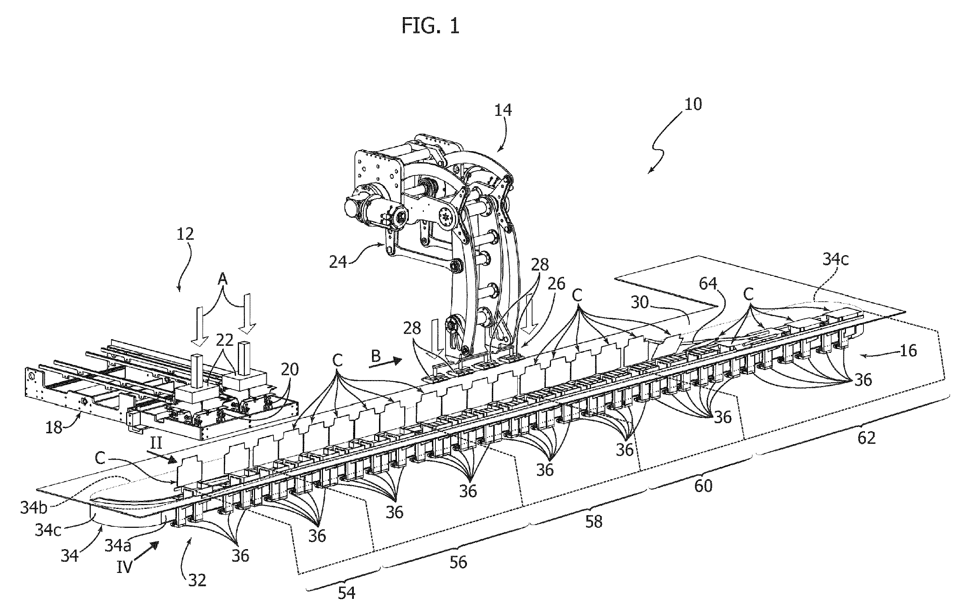

With reference to Figure 1, numeral 10 indicates a packaging system that carries out the forming of containers, the filling of containers with predetermined quantities of products, such as confectionery products, and possibly the closing of the containers.

The packaging system 10 comprises a forming station 12, a filling station 14 and, possibly a closing station 16. The closing station is not required in the case where the containers are in the form of trays without lids. The forming station 12 comprises a forming device 18 configured for forming containers C, for example in a box-shape, starting from initially flat die-cut cardboard blanks, having a shape corresponding to the flat template of the containers C. The forming device 18 can have one or more forming units 20 equipped with respective forming elements 22, movable in the direction indicated by arrows A, configured to carry out the folding of the initially flat cardboard blanks to form the containers C.

The structure and operation of the forming device 18 are not described in detail as they fall outside the scope of the present invention. In the example illustrated in the figures, the forming device 18 has two forming units 20 and carries out the forming of two containers C for each movement cycle of the forming elements 22. It is understood that the forming device 18 may have any number of forming units, and may be of any known type or yet to be developed.

The filling station 14 comprises an automatic manipulator 24 having a head 26 configured to pick up the products from a feed conveyor (not shown) and to deposit the products inside respective containers C. The head 26 may have one or more gripping elements 28, each of which picks up and deposits one or more products inside a respective container C, for each work cycle of the manipulator 24. The manipulator 24 and the head 26 may be of any type commercially available or yet to be developed.

The packaging system 10 comprises a stationary support plane 30 that extends in the horizontal direction between the forming station 12, the filling station 14 and, if present, the closing station 16. A conveyor 32 is located below the stationary support plane 30. The conveyor 32 is formed by a linear motor including a stator 34, and a plurality of movers 36, movable along the stator 34 in an independent manner from each other. The stator 34 extends along a closed loop path and has two straight branches 34a, 34b which, in the illustrated example, are parallel to each other and connected at their ends by two curved branches 34c. The branch 34a serves as a transporting branch and the branch 34b acts as a return branch.

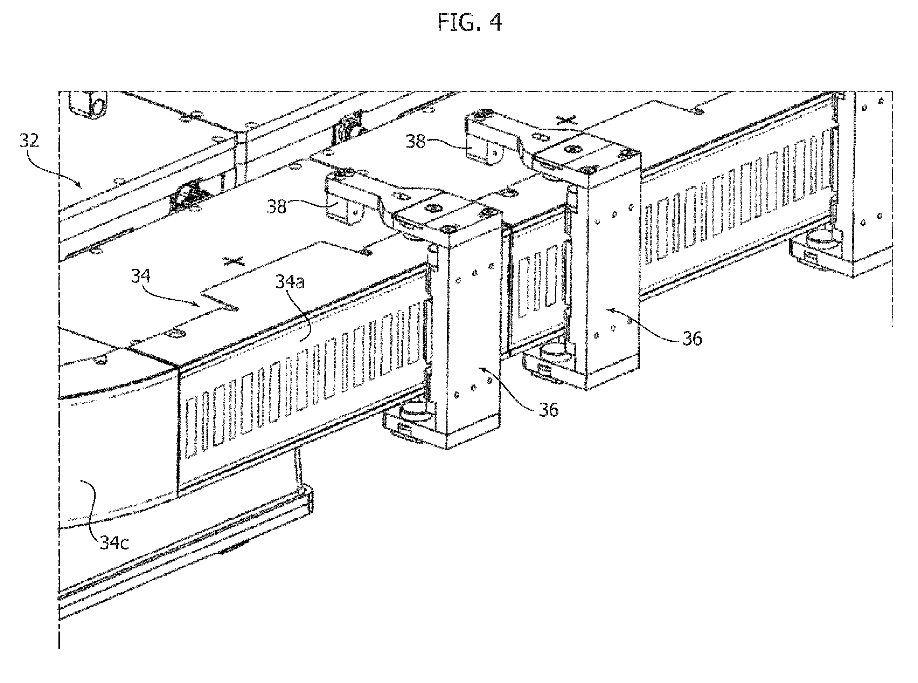

With reference to Figure 4, the linear motor 32 forming the conveyor may be a linear synchronous motor (LSM), for example, produced by Jacobs Automation LLC. The stator 34 is equipped with stator windings controlled by an electronic control unit. Each mover 36 is equipped with a permanent magnet, which cooperates with the stator magnetic field. Each mover 36 is also equipped with an identification magnet 38 that cooperates with an encoder for allowing the electronic control unit to detect the position of each mover 36 along the stator 34. The electronic control unit is able to control the position, speed and acceleration of the movers 36, independently from each other.

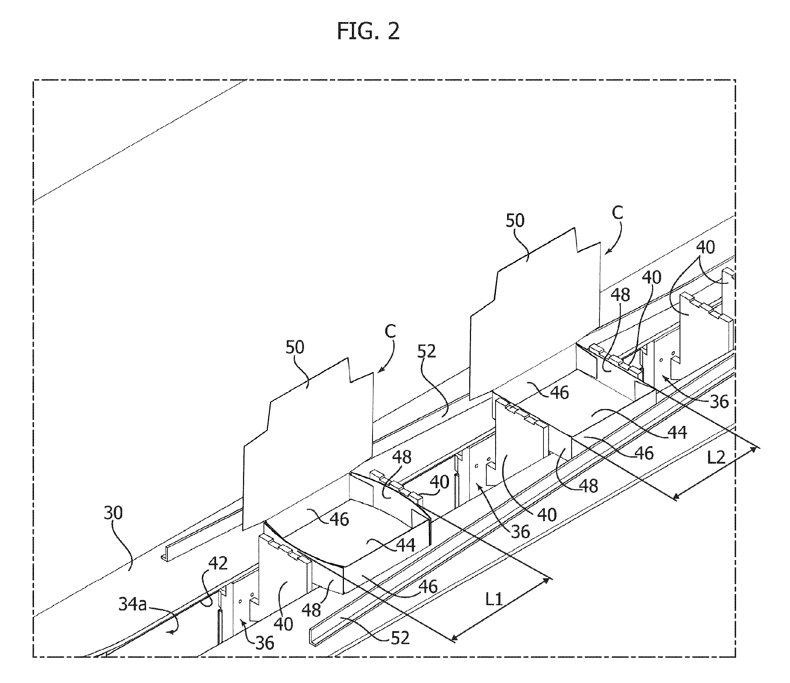

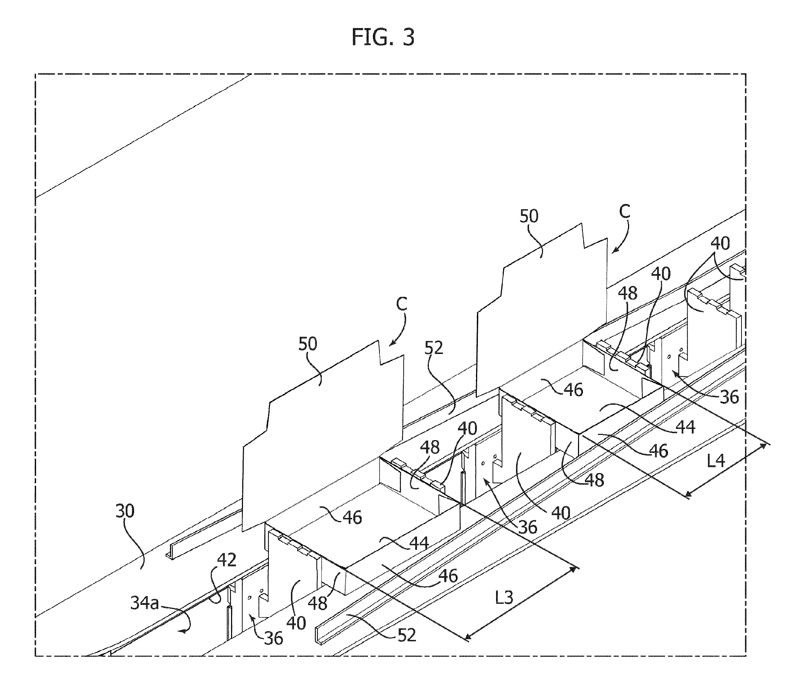

With reference to Figures 2 and 3, each mover 36 carries a respective pushing element 40. The stationary support plane 30 has a longitudinal slot 42 that extends parallel to the transport branch 34a of the stator 34. The pushing elements 40 extend above the stationary support plane 30 through the opening 42.

With reference to Figures 2 and 3, each container C has a bottom wall 44, two longitudinal walls 46 and two transverse walls 48. Each container C can also be equipped with a lid 50 connected by a fold line at the upper edge of one of the longitudinal walls 46.

The stationary support plane 30 has two longitudinal guides 52 located on opposite sides of the slot 42. In the forming station 12, the guides 52 are inclined and converging in the transport direction. Downstream of the forming station 12, the guides 52 are parallel and spaced apart by a distance equal to the distance between the longitudinal walls 46 of the containers C.

With reference to Figure 1, the conveyor 32 transports the containers C along a transport path in the direction indicated by the arrow B. In the example illustrated in the figure, the transport path is divided into: a forming area 54, a first accumulation area 56, a filling area 58, a second accumulation area 60 and a closing area 62.

With reference to Figures 2 and 3, each container C is retained between two pushing elements 40 of two adjacent movers 36. The pushing elements 40 come into contact with the transverse walls 48 of the respective container C.

As is illustrated in Figure 2, at the outlet of the forming device 18, the containers C frequently have outwardly-arched transverse walls 48. The conveyor receives each container C between two adjacent pushing elements 40 with a distance L1 between the pushing elements 40, greater than the nominal distance between the transverse walls 48. After receiving a container C, the movers 36 associated with the same container C approach each other so as to bring the distance between the pushing elements 40, associated with each container C, to a value L2 equal to the nominal distance between the transverse walls 48. In this way, the transverse walls 48 initially arched outwards are straightened by the movement of mutual approach of the two pushing elements 40. The containers C are positively retained between the two pushing elements 40 during the entire transport path.

The packaging system 10 can be adapted to a size variation of the containers C. With reference to Figure 3, adapting to a variation in the longitudinal dimension of the containers C is achieved by varying the distance between the pushing elements 40 from the value L4, corresponding to old format, to the value L3, corresponding to the new format. Adapting to a variation in the transverse dimension of the containers C is carried out by adjusting the position of the guides 52.

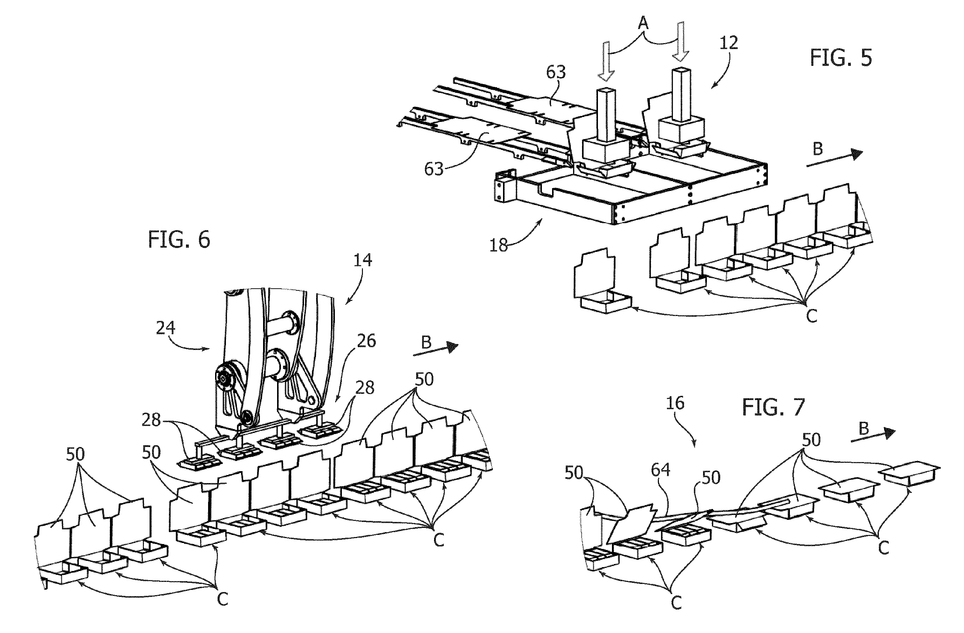

Figures 5, 6 and 7 schematically illustrate the operation of the packaging system 10. In the first step, illustrated in Figure 5, the forming device 18 carries out the forming of the containers C starting from flat cardboard blanks 63. At the outlet of the forming device 18, the containers C are placed on the stationary support plane 30 and are picked up from the conveyor 32, as previously described. The containers C are advanced from the forming station 12 to the filling station 14. In the filling station 14, the containers C can be temporarily kept in a stationary position for the period of time required for the manipulator 24 to carry out the filling of containers C. In the filling station 14, the distance between the containers C is set in such a way to correspond to the distance between the gripping units 28 of the head 26 of the manipulator 24. The conveyor 32 enables setting the position of each container C, so that the containers C can be precisely positioned level with the work area of the respective gripping element 28.

At the end of the filling operation, the containers C are advanced towards the closing station 16. The closing of the lids 50 can be carried out by means of stationary folding devices 64 that carry out the folding of the lids 50 by means of the advancing movement of the containers C in the direction B. The projecting wings of the lids 50 can be folded and sealed by means of closing units of the type known per se.

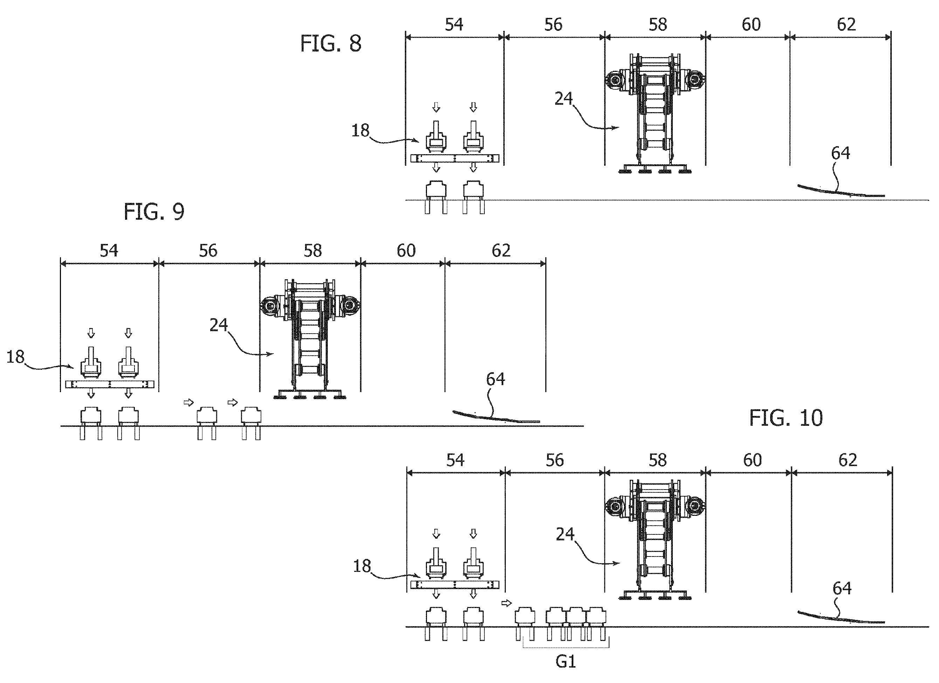

Figures 8 to 16 schematically illustrate a possible work program of the packaging system 10.

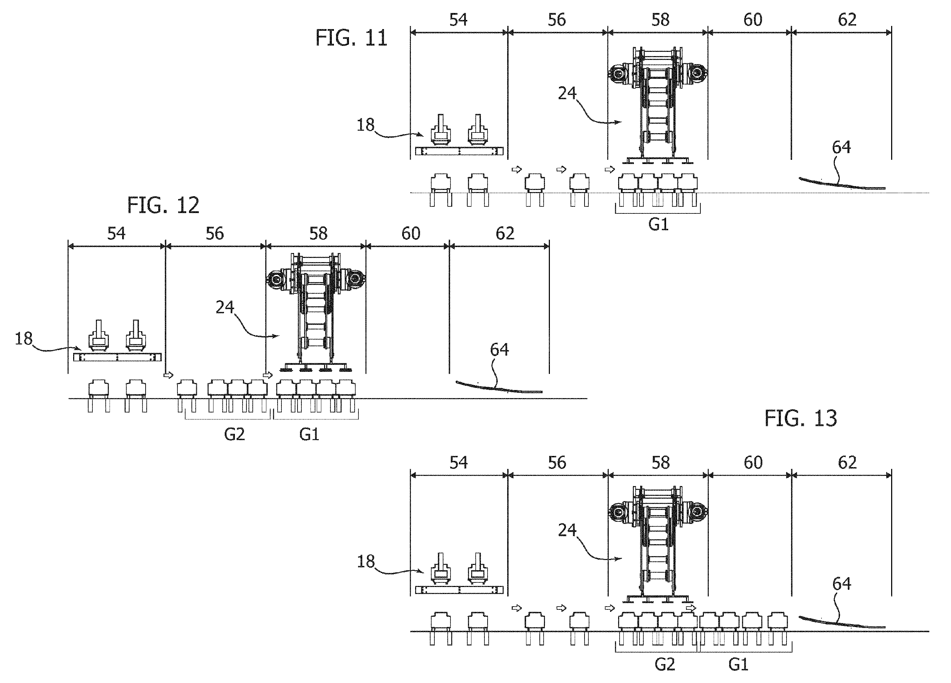

Figure 8 schematically illustrates the packaging system 10 at the beginning of a work program. The conveyor 32 is initially empty. The forming device 18 starts to form containers C. The containers C are picked up from the conveyor 32 and transferred from the forming area 54 to the first accumulation area 56. Figure 10 shows the condition where a group of containers G1 has been formed, of a number equal to the number of the gripping elements 28 of the manipulator 24, in the first accumulation area 56. At this point, the group of containers G1 is transferred to the filling area 58 (Figure 11).

While the manipulator 24 carries out the filling of the first group of containers G1, new containers from the forming area 54 accumulate in the first accumulation area 56.

With reference to Figure 12, when the manipulator 24 has completed the filling of the first group of containers G1, a second group of containers G2 collects in the first accumulation area 56.

At this point, as illustrated in Figure 13, the first group of full containers G1 is transferred to the second accumulation area 60, and the second group of containers G2 is transferred to the filling area 58.

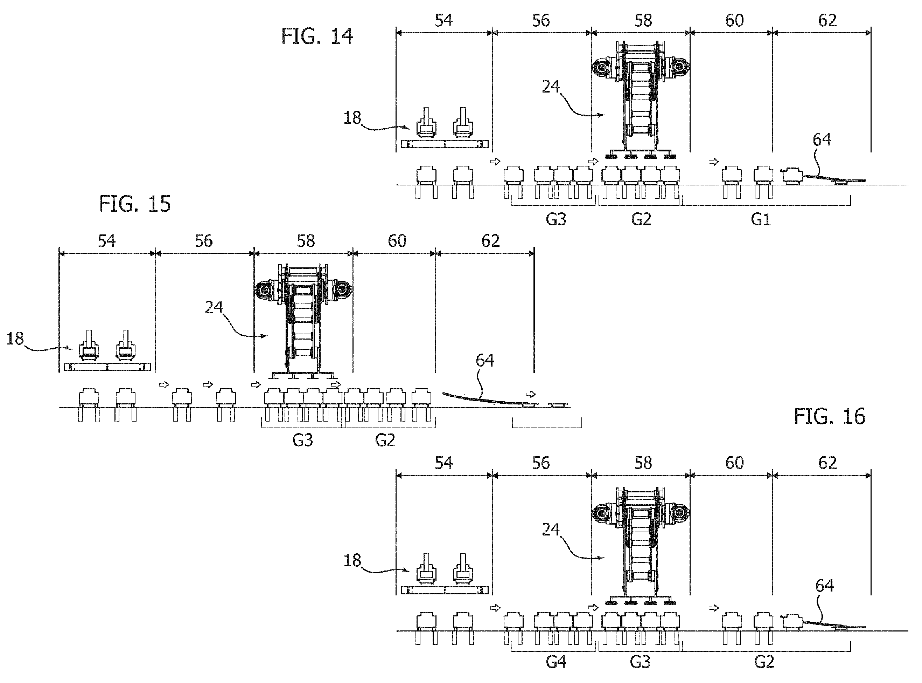

Then, as illustrated in Figure 14, the first group of containers G1 is made to pass through the closing area 62 while the second group of containers G2 is filled in the filling area 58 and a third group of containers G3 accumulates in the first accumulation area 56.

When the second accumulation area 60 is empty, the second group of containers G2 is transferred to the second accumulation area 60, and the third group of containers G3 is transferred to the filling area 58 (Figure 15).

At this point, as illustrated in Figure 16, the system is at steady state and the operating cycle is repeated for successive groups of products G4... Gn. In the accumulation areas 56, 60, the containers are separated and kept spaced apart from each other at the required pitch, unlike what happens in the known solutions in which the containers are piled up on a conveyor belt in the accumulation areas, with the consequent need for repositioning, along with interlocking problems.

Of course, without prejudice to the principle of the invention, the details of construction and the embodiments may vary widely with respect to those described and illustrated without departing from the scope of the invention as defined by the following claims.

## Claims

1. A packaging system, comprising:
- a container forming station (12),
- a container filling station (14), and
- a conveyor (32) arranged to pick up the containers (C) from said forming station (12) and to transfer the containers (C) to said filling station (14),
**characterized in that** said conveyor (32) is formed by a linear motor including a stator (34) and a plurality of movers (36) independently movable from each other along said stator (34), wherein each of said movers (36) carries a respective pushing element (40) and wherein, during operation, each container (C) is held between two pushing elements (40) of two movers (36) adjacent to each other.

2. A system according to claim 1, **characterized in that** said stator (34) extends along a closed loop path.

3. A system according to claim 1, **characterized in that** it comprises a stationary support plane (30) on which said containers (C) rest, wherein said conveyor (32) is located below said stationary support plane (30) and wherein the pushing elements (40) extend above said stationary support plane (30) through a slot (42) of said stationary support plane (30) extending along a transport path.

4. A method for packaging products, comprising the steps of:
- forming a plurality of containers (C) in a forming station (12),
- transporting said containers (C) from said forming station (12) to a filling station (14), and
- filling said containers (C) in said filling station (14),
**characterized in that** the transport of said containers (C) is effectuated by a linear motor (32) including a stator (34) and a plurality of movers (36) independently movable from each other along said stator (34), wherein each of said movers (36) carries a respective pushing element (40) and wherein each container (C) is held between two pushing elements (40) of two movers (36) adjacent to each other.

5. A method according to claim 4, **characterized in that** it comprises the steps of accumulating a group of containers (G1, G2, G3 ...) in an accumulation station (56) between said forming station (12) and said filling station (14).

6. A method according to claim 4, **characterized in that** in the forming station (12) each container (C) is received between two pushing elements (40) located at a relative distance (L1) in the transport direction (B), greater than the nominal length (L2) of the containers (C), and **in that** the pushing elements (40) are subsequently approached at a relative distance (L2) equal to the nominal length of the containers (C).
